# NEUE EUROPÄISCHE PATENTSCHRIFT

(11) **EP 3 016 770 B2**
(45) Veröffentlichungstag und Bekanntmachung des Hinweises auf die Entscheidung über den Einspruch: **20.09.2023**
(45) Hinweis auf die Patenterteilung: 06.05.2020
(21) Anmeldenummer: 14736746.0
(22) Anmeldetag: 03.07.2014
(51) Int. Cl.: B23C 5/10, B23B 51/02, B23B 31/117, B23B 31/11

(54) **WECHSELKOPFSYSTEM FÜR DIE METALLBEARBEITUNG**
EXCHANGEABLE-HEAD SYSTEM FOR METAL WORKING
SYSTÈME DE TÊTE INTERCHANGEABLE POUR L'USINAGE DE MÉTAUX

(30) Priorität: 04.07.2013 DE 102013213123
(43) Veröffentlichungstag der Anmeldung: 11.05.2016
(73) Patentinhaber: Schwegler Werkzeugfabrik GmbH & Co. KG, 89269 Vöhringen (DE)
(72) Erfinder: STURM, Philipp-Patrick, 89287 Bellenberg (DE); SCHWEGLER, Bernd, 89269 Vöhringen (DE); SCHWEGLER, Reiner, 89269 Vöhringen (DE)
(74) Vertreter: Körfer, Thomas
(86) Internationale Anmeldenummer: PCT/EP2014/064185
(87) Internationale Veröffentlichungsnummer: WO 2015/001022

(56) Entgegenhaltungen:
- WO-A1-2007/118626
- WO-A1-2010/110735
- DE-A1-102006 014 602
- DE-A1-102006 028 408
- DE-U1- 9 201 729
- DE-U1-202006 010 498
- DE-U1-202011 109 498
- GB-A- 210 513
- US-A- 2 167 014
- US-A- 3 534 640
- US-A1- 2011 193 299
- US-A1- 2011 318 121

## Beschreibung

Die Erfindung betrifft Wechselkopfsysteme als Einsatzwerkzeuge für Maschinen zur Metallbearbeitung.

In der Metallbearbeitung kommen für Aufgaben der Zerspanung, der spanlosen Formgebung oder für reibenden Verschleiß eine Vielzahl von Werkzeugsystemen etwa zum Bohren, Fräsen, oder Reiben zum Einsatz. Die Maschinen verfügen meist über ein Futter, bspw. ein Spann- oder Schrumpffutter, zur Aufnahme von Einsatzwerkzeugen wie bspw. einem Bohr- oder Fräswerkzeug.

Die Einsatzwerkzeuge bestehen häufig ganz oder teilweise aus Hartmetall, bspw. gesinterten Carbidhartmetallen. Hartmetallwerkzeuge sind in der Herstellung teuer, haben jedoch eine hohe Standfestigkeit, so dass große Standmengen bzw. hohe Schnittleistungen bei guter Schneidfreudigkeit erreicht werden können.

Es ist bekannt, Werkzeuge zum Bohren oder Fräsen als Wechselkopfsysteme auszuführen. Ein derartiges System umfasst den eigentlichen Kopf für die z.B. bohrende oder fräsende Bearbeitung, sowie einen Halter oder Schaft zur Aufnahme des Kopfes. Der Halter ist seinerseits zur Aufnahme in das Maschinenfutter vorgesehen. Treten Abnutzungserscheinungen auf, muss nur der verbrauchte Kopf des Einsatzwerkzeuges aus dem Halter entnommen und ein neuer Kopf eingesetzt werden. Dies senkt den Hartmetallverbrauch und somit die Kosten.

Für eine optimierte Standfestigkeit wird neben dem Kopf meist auch der Halter aus Hartmetall gefertigt. Die Verbindung zwischen Kopf und Halter soll ein schnelles und zuverlässiges Einsetzen des Kopfes in den Halter bzw. Entfernen des Kopfes aus dem Halter ermöglichen und somit für das Bedienpersonal mit geringem Aufwand und bei kurzen Werkzeugwechselzeiten durchführbar sein. Weiterhin muss der Kopf bei der Bearbeitung zuverlässig gehalten werden, d.h. etwa gegen ein Verdrehen bzw. Durchdrehen im Halter gesichert sein. Bei Verhaken oder Festfressen soll der Kopf nicht aus dem Halter herausgezogen werden.

Es sind verschiedene Wechselkopfsysteme bekannt, bei denen Kopf und Halter über Gewinde miteinander verbunden werden; bspw. kann ein Innengewinde am Halter zum Einschrauben des Kopfes vorgesehen sein, oder umgekehrt. Allerdings verursacht das Gewindeschneiden in Hartmetall hohe Kosten, so dass diese Systeme teuer in der Herstellung sind.

Aus der US 2011/0193299 A1 ist ein System bekannt, bei dem ein Werkzeug einen Einsteckbereich hat und ein Werkzeughalter einen Aufnahmebereich mit einer Aufnahmeöffnung hat. Das Werkzeug wird mit seinem Einsteckbereich in die Aufnahmeöffnung des Halters aufgenommen. Eine weitere, seitliche Öffnung im Aufnahmebereich verläuft bis zu einer Aussparung in einer seitlichen Innenwand der Aufnahmeöffnung. Der Einsteckbereich des Werkzeugs verfügt ebenfalls über eine seitliche Aussparung. Im aufgenommenen Zustand wird ein mechanisches Rückhalteelement, bspw. ein Zapfen, durch die seitliche Öffnung im Aufnahmebereich in die zueinander korrespondierenden Aussparungen in den Seitenwandungen von Aufnahmeöffnung am Halter und Einsteckbereich des Kopfes eingeführt, so dass der Kopf im Halter gegen axiale Verschiebungen gesichert wird.

Das System ermöglicht keine Selbst-Stabilisierung bei Verhaken oder Festfressen des Kopfes. Weil der Kopf durch Einstecken in den Halter und anschließendes Drehen gesichert wird, entfällt außerdem die Sicherung durch den Zapfen wenn der Kopf während der Bearbeitung im Halter gedreht wird.

Die DE 10 2006 028 408 A1 beschreibt einen Werkzeughalter mit einer Werkzeugaufnahme zur Aufnahme eines Werkzeugschaftes und einer Auszugssicherung um ein axiales Auswandern des Werkzeugs zu sperren. Die Auszugssicherung umfasst ein Sperrelement und eine dazu korrespondierende und das Sperrelement aufnehmende Sperrnut. Dabei sind sowohl das Sperrelement als auch die Sperrnut kugelkopfartig ausgebildet. Vorzugsweise weist das Werkzeug die Sperrnut auf. Der Werkzeughalter weist z.B. zwei drehbar gelagerte Kugeln auf. Jede Kugel kann bspw. durch einen Gewindestift in einer Position gehalten werden, bei der sie in den Innenraum der Aufnahmeöffnung ragt. Aufgrund von vorzugsweise spiralförmig angeordneten Sperrnuten entlang des Zylinderschafts von Rotationswerkzeugen erfolgt eine axiale Sperrung des Werkzeugs.

Die DE 20 2011 109 498 U1 beschreibt einen Werkzeughalter mit einer Aufnahme zum Spannen eines Werkzeugs. Ein Sperrelement dient zur Verhinderung eines axialen Auswanderns des Werkzeugs aus dem Werkzeughalter und greift hierzu in ein korrespondierendes Gegenelement am Werkzeug ein. Das Sperrelement ist zur einfachen Herstellbarkeit und leichten Montierbarkeit einteilig mit der Aufnahme ausgebildet.

Die DE 10 2006 014 602 A1 beschreibt ein Zerspanwerkzeug mit einem Zerspankopf und einer Haltevorrichtung. Zur Aufnahme in die Haltevorrichtung verfügt der Kopf über einen Schaft mit einem konischen Abschnitt und einem zylindrischen Abschnitt. Zur Aufnahme des Kopfes weist die Haltevorrichtung eine entsprechende Ausnehmung mit einem konischen und einem zylindrischen Abschnitt auf. Im zylindrischen Abschnitt verlaufen zwei Bohrungen jeweils tangential zur Wandung und mit einem Neigungswinkel gegenüber einer Senkrechten der Werkzeugachse. In jede der Bohrungen ist ein Stift eingepasst. Der zylindrische Abschnitt am Kopf weist Aussparungen auf, um ein Einsetzen des Kopfes in die Haltevorrichtung zu ermöglichen. Durch Drehen des Kopfes kann dieser in der Haltevorrichtung verriegelt werden.

Die US 2011/0318121 A1 beschreibt eine Schneidspitze für ein Schneidwerkzeug mit einem Schneidkopf und einem Halter. Bei einer Ausführungsform wird ein konischer Schaft der Schneidspitze in den Halter aufgenommen, wobei der Halter drei Bohrungen aufweist, durch die hindurch jeweils ein Element mit einer Nut im Schaftbereich der Schneidspitze im Eingriff steht.

Ein Halter für einen Wechselkopfsystem als Einsatzwerkzeug für Maschinen zur Metallbearbeitung ist aus der US 2,167,014 A bekannt.

Eine Aufgabe der Erfindung besteht darin, ein Wechselkopfsystem vorzuschlagen, welches einen Kopfwechsel in kurzer Zeit und mit geringem Aufwand ermöglicht, welches im Einsatz zuverlässig gehalten wird, und dabei kostengünstig ist, sowie einen entsprechenden Halter, einen entsprechenden Kopf.

Die Aufgabe wird für das Wechselkopfsystem durch die Merkmale des Anspruchs 1 gelöst.

Erfindungsgemäß wird ein Wechselkopfsystem aus Hartmetall vorgeschlagen, welches neben Kopf und Halter auch einen Stift umfasst, der zur Befestigung des Kopfes am Halter über eine Bohrung dient. Die Bohrung durchstößt eine Passfläche zwischen Kopf und Halter tangential. Die Bohrung verläuft außerdem schräg zu einer Normalen zur Verbindungsachse von Halter und Kopf, d.h. die Bohrachse hat einen axialen Anteil bezogen auf die Verbindungsachse zwischen Halter und Kopf.

Der Stift kann zur Aufnahme in die Bohrung derart vorgesehen sein, dass bei Aufnahme des Kopfes am Halter der Stift in eine Nut eingreift. Der Eingriff kann um weniger als die Hälfte eines Stiftdurchmessers erfolgen, so dass der Stift großenteils vom Halter umfasst und so stabilisiert wird. Der Stift kann aus Hartmetall zu geringen Kosten gewindefrei ausgeführt sein.

Bei einigen Ausführungsformen sind die Nut am Kopf und die Bohrung am Halter ausgebildet. Die Bohrung kann eine äußere Oberfläche des Halters einmal durchstoßen, so dass die Bohrung nur eine Öffnung hat, durch die der Stift eingeführt werden kann. Alternativ kann die Bohrung den Halter ganz durchstoßen, so dass der Stift durch zwei Öffnungen eingeführt werden kann.

Bei bestimmten Ausführungsformen kann die Bohrung und/oder die Nut bezogen auf die Normale zur Verbindungsachse von Halter und Kopf einen Winkel bilden, der größer ist als für Gewinde typisch. Der Winkel kann zwischen 20° und 60° liegen, bevorzugt zwischen 30° und 45°. Eine Steigung der Nut bspw. am Kopf kann in axialer Richtung größer sein als eine Steigung einer Schneidkante zur Metallbearbeitung am Kopf.

Bei einigen Ausführungsformen verläuft die Nut spiralförmig um den Kopf. Der axiale Abstand der Nut von sich selbst kann nach einer Umdrehung ein Mehrfaches der Nutbreite betragen, bspw. mindestens das Doppelte, bevorzugt das Dreifache oder mehr der Nutbreite. Bei diesen oder anderen Ausführungsformen kann die Nut über ihre ganze Länge 3 mal oder weniger, bevorzugt 1,5 mal oder weniger um den Kopf verlaufen.

Die Nut kann bspw. halbkreisförmig in eine äußere Oberfläche des Kopfes eingeschnitten sein. Der Stift kann einen runden Querschnitt haben. Dabei kann ein Durchmesser der Nut größer als ein Durchmesser des Stiftes sein, so dass der Stift mit Spiel in die Nut eingreift. Dies erleichtert ein Einfügen des Kopfes in den Halter.

Der Halter kann eine gewindefreie Ausnehmung zur Aufnahme des Kopfes aufweisen. Die Passfläche am Halter kann zur formschlüssigen Aufnahme des Kopfes für eine Anlagerung eines sich konisch verjüngenden Kegelabschnitts am Kopf ausgebildet sein.

Ausführungsformen erfindungsgemäßer Wechselkopfsysteme können aus einem Set bestehen, welches einen Halter und eine Mehrzahl an Köpfen umfasst, die gleich ausgebildet sein können und als Ersatz bei Abnutzung dienen und/oder für unterschiedliche Bearbeitungsaufgabe unterschiedlich ausgebildet sein können. Das Set kann auch mehrere Halter mit z.B. unterschiedlichen Abmessungen umfassen. Das Set kann einen oder mehrere Stifte umfassen.

Es wird weiterhin ein Kopf aus Hartmetall für ein Wechselkopfsystem vorgeschlagen. Der Kopf weist in einem Verbindungsbereich zur Verbindung mit einem Halter des Wechselkopfsystems einen sich konisch verjüngenden Kegelabschnitt auf. Eine Nut im Verbindungsbereich verläuft 3 mal oder weniger, bevorzugt 1,5 mal oder weniger, spiralförmig um den Kopf.

Weiterhin wird ein Halter aus Hartmetall für ein Wechselkopfsystem vorgeschlagen. Der Halter weist eine Passfläche zur formschlüssigen Aufnahme eines Kopfes des Wechselkopfsystems auf. Eine Bohrung durchstößt die Passfläche tangential. Die Bohrung verläuft schräg zu einer Normalen zur Verbindungsachse von Halter und Kopf. Der Halter kann eine gewindefreie Passfläche haben.

Es wird schließlich ein Herstellungsverfahren für einen Halter aus Hartmetall vorgeschlagen, bei dem ein Stift in eine Bohrung des Halters eingebracht wird. Die Bohrung durchstößt eine Passfläche tangential, die für ein formschlüssiges Zusammenfügen eines Kopfes des Wechselkopfsystems mit dem Halter vorgesehen ist. Die Bohrung verläuft schräg zu einer Normalen zur Verbindungsachse von Halter und Kopf.

Formen des Verfahrens umfassen das Arretieren des Stiftes in der Bohrung und/oder das Abschneiden des Stiftes in der Bohrung. Der Stift kann bereits ab Werk in die Bohrung eingefügt und dort arretiert, bspw. verklebt werden, oder kann erst beim (z.B. erstmaligen) Einsatz des Wechselkopfsystems eingefügt werden. Der Stift kann länger als die Bohrung im Halter sein; dies vereinfacht ein Einfügen (ggf. auch ein Entnehmen) des Stiftes. Nach dem Einfügen und ggf. Arretieren kann der Stift abgeschnitten werden, so dass seine Schnittfläche bündig mit einer Außenkontur des Halters abschließt.

Bei einem erfindungsgemäß ausgebildeten Wechselkopfsystem kann auf ein Gewinde zur Verbindung von Halter und Kopf verzichtet werden, und auch die erfindungsgemäß vorgesehenen Elemente Stift, Bohrung und Nut können gewindefrei ausgeführt werden. Dies verringert wesentlich die Herstellungskosten von Halter, Kopf und/oder Stift. Außerdem erleichtern ein gewindefreier Aufnahmebereich am Halter und/oder ein gewindefreier Verbindungsbereich am Kopf die Aufnahme des Kopfes im Halter bzw. das Entnehmen des Kopfes aus dem Halter, d.h. der Kopfwechsel kann schneller und einfacher durchgeführt werden. Spezielles Werkzeug für den Kopfwechsel kann überflüssig werden.

Zur Befestigung des Kopfes am Halter muss lediglich der Stift in die Bohrung aufgenommen sein. Der Stift kann vor oder nach der Aufnahme des Kopfes in die Bohrung eingefügt werden. Insbesondere kann der Stift beim Kopfwechsel in der Bohrung verbleiben.

Ein Halten des Kopfes während der Metallbearbeitung kann etwa derart sichergestellt werden, dass die gegenseitigen Passflächen an Kopf und Halter Kegelform haben, d.h. konisch zulaufen. Diese Form bewirkt eine automatische Zentrierung beim Verbinden ebenso wie bei der Bearbeitung. Bei der Bearbeitung werden außerdem Kopf und Halter automatisch form- und insbesondere kraftschlüssig zusammengefügt. Ein Halten mittels Plananschlag oder Schrumpfen kann entfallen. An Bohrung, Stift und Nut werden bei diesen Ausführungsformen keine erhöhten Anforderungen an mechanische Stabilität gestellt, da die Kegelform bei Verhaken oder Festfressen eine automatische Selbst-Stabilisierung erlaubt.

Die Bohrung am Halter und die Nut am Kopf haben einen axialen Anteil. Auf diese Weise können gewindetypische Eigenschaften und Vorteile genutzt werden, obwohl kein Gewinde vorhanden ist. So kann der Kopf bspw. bei einer spiralförmigen Nut in den Halter mit eingefügtem Stift eingedreht werden und es kann ohne weitere Maßnahmen ein sicherer Halt erzielt werden. Im Betrieb ermöglicht die schräge Anordnung von Bohrung, Stift und/oder Nut, ggf. im Zusammenwirken mit einem etwa vorhandenen Gewinde im Bearbeitungsbereich des Kopfes, einen optimierten Reibschluss zwischen Halter und Kopf, bspw. über eine kegelförmige Passfläche. Gleichzeitig kann ein Herausziehen des Kopfes bei Blockaden oder Festfressen vermieden bzw. verhindert werden, vielmehr kann der Kopf in den Halter hineingedreht werden.

Somit kann eine höhere Schneidfreudigkeit bzw. höhere Schnittgeschwindigkeit erzielt werden.

Die Nut am Kopf kann im Vergleich etwa zu einem Gewinde kurz sein. So kann die Nut im Vergleich nur wenige Male um den Kopf herumführen, oder kann nur um einen Teil des Umfangs herumführen. Es ist auch denkbar, mehrere kurze Nute am Kopf vorzusehen, z.B. zwei, drei oder vier Nute, um eine Aufnahme am Halter mit eingefügtem Stift zu erleichtern.

Der Stift kommt im Wesentlichen an nur einem Punkt zur Anlage an den Kopf bzw. greift an diesem Punkt in die Nut im Kopf ein. Daher müssen Bohrung bzw. Stift und Nut, anders als bei einem Gewinde, nicht besonders genau aneinander angepasst sein. So können etwa die Steigungen von Bohrung und Nut unterschiedlich sein. Die Vorteile der Erfindung können bspw. auch dann verwirklicht werden, wenn die axialen Winkel von Bohrung und Nut 60° und 45° betragen (oder umgekehrt). Auch der Durchmesser von Bohrung bzw. Stift und Nut muss nicht exakt aneinander angepasst sein. Die geringen Genauigkeitsanforderungen führen zu günstigen Herstellungskosten.

Es wird ein Wechselkopfsystem als Einsatzwerkzeug für Maschinen zur Metallbearbeitung vorgeschlagen, welches mindestens einen Halter, einen Kopf, und einen Stift umfasst. Der Kopf weist einen sich konisch verjüngenden Kegelabschnitt auf. Der Halter weist eine gewindefreie Ausnehmung zur Aufnahme und Anlagerung des Kegelabschnitts über gemeinsame Passflächen auf. Der Stift dient zur Befestigung des Kopfes am Halter über eine Bohrung, wobei die Bohrung senkrecht und radial in Bezug auf eine gemeinsame Mittelachse von Halter und Kopf verläuft.

Der Kegelabschnitt kann mit der Mittelachse von Halter und Kopf einen Winkel bilden, der zwischen 2° und 10° liegt, bevorzugt zwischen 3° und 7°, besonders bevorzugt bei 5°.

Die Bohrung kann die Passfläche zur Anlagerung des Kegelabschnitts durchstoßen. Bei anderen Ausführungsformen ist die Bohrung nicht im Bereich der Kegelpassung vorgesehen, sondern bspw. in einem Bereich der Halterung, in der diese korrespondierend zu einem zylindrischen Kopfabschnitt gebildet ist.

Kopf, Halter und Stift können aus Stahl oder Metall, insbesondere Hartmetall hergestellt sein. Bei gegenwärtig bevorzugten Ausführungsformen sind genau eine Bohrung und genau ein Stift vorgesehen. Der Stift, kann dazu vorgesehen sein, im Halter verlötet zu werden.

Der Stift kann einen Durchmesser zwischen 0,5 mm (Millimetern) und 4,0 mm haben, bevorzugt zwischen 1,0 mm und 3,0 mm, besonders bevorzugt bei 2,0 mm.

Der Stift kann einen kugelförmig ausgebildeten Eingriffsbereich zum Eingriff in den Werkzeugkopf aufweisen. Der Kopf kann zum Eingriff durch den Stift am Werkzeugkopf eine Nut mit konstanter Steigung ausgebildet sein. Die Steigung kann mit der Mittelachse von Halter und Kopf einen Winkel bilden, der zwischen 70* und 85° liegt, bevorzugt zwischen 75° und 83°, besonders bevorzugt bei 80°.

Es wird weiterhin ein Halter für ein Wechselkopfsystem als Einsatzwerkzeug für Maschinen zur Metallbearbeitung vorgeschlagen. Der Halter umfasst eine gewindefreie Ausnehmung zur Aufnahme und Anlagerung eines sich konisch verjüngenden Kegelabschnitts eines Kopfes über gemeinsame Passflächen. Der Halter umfasst weiterhin eine Bohrung zur Befestigung des Kopfes am Halter mittels eines Stiftes, wobei die Bohrung senkrecht und radial in Bezug auf eine gemeinsame Mittelachse von Halter und Kopf verläuft.

Es wird außerdem ein Kopf für ein Wechselkopfsystem als Einsatzwerkzeug für Maschinen zur Metallbearbeitung vorgeschlagen. Der Kopf umfasst einen sich konisch verjüngenden Kegelabschnitt zur Aufnahme in und Anlagerung über gemeinsame Passflächen an eine gewindefreie Ausnehmung eines Halters. Der Kopf umfasst weiterhin eine Nut mit konstanter Steigung zum radialen Eingriff durch einen Stift zur Befestigung des Kopfes am Halter. Die Steigung bildet mit einer gemeinsamen Mittelachse von Halter und Kopf einen Winkel, der zwischen 70° und 85° liegt, bevorzugt zwischen 75° und 83°, besonders bevorzugt bei 80°.

Es wird schließlich ein Herstellungsverfahren für einen Halter für ein Wechselkopfsystem als Einsatzwerkzeug für Maschinen zur Metallbearbeitung vorgeschlagen. Das Verfahren umfasst das Einbringen eines Stiftes in eine Bohrung am Halter. Diese mündet in eine gewindefreie Ausnehmung des Halters. Die Ausnehmung ist zur Aufnahme und Anlagerung eines sich konisch verjüngenden Kegelabschnitts eines Kopfes über gemeinsame Passflächen ausgebildet. Die Bohrung verläuft senkrecht und radial in Bezug auf eine gemeinsame Mittelachse von Halter und Kopf. Das Verfahren umfasst weiterhin das Verlöten des Stiftes in der Bohrung und/oder das Abschneiden des Stiftes in der Bohrung.

Es sind Wechselkopfsysteme wie die eingangs beschriebenen bekannt, bei denen ein Werkzeug bspw. In einem Schrumpffutter gehalten wird. Ein Verdrehen des Werkzeuges wird durch die Spannung im Schrumpffutter verhindert; sollen zusätzliche Drehmomente bzw. Torsionsmomente aufnehmbar sein, dann kann bspw. eine zusätzliche Verstiftung vorgesehen werden. In diesem Fall ist eine Mehrzahl an Stiften vorgesehen; auch sind zweckmäßigerweise Stifte mit einem großen Durchmesser vorzusehen, um maßgebliche Drehmomente aufnehmen zu können.

Im Gegensatz hierzu wird bei vorliegenden Wechselkopfsystemen, bspw. solchen aus Vollhartmetall, ein Werkzeug mittels einer Kegelpassung gehalten. Die Spannung des Werkzeugs findet überwiegend ûber den Kegel statt, d.h. der Stift dient überwiegend zum Einspannen bzw. Lösen des Werkzeugkopfes. Nachdem die Verstiftung nicht zur Aufname von Torsionsmomenten ausgelegt werden muss, wird bei vielen Ausführungsbeispielen nur ein Stift benötigt, und nur eine Bohrung. Es können aber auch mehrere Stifte vorhanden sein. Der Stift kann auch vergleichsweise klein sein und bspw. nur einen Durchmesser von 2,0 mm haben. Die Berücksichtigung eines oder mehrerer dieser Aspekte führt zu einer vergleichsweise kostengünstigen Lösung im Vergleich zu den bekannten Systemen.

Radialbohrungen sind vergleichsweise einfach herzustellen und kostengünstig in der Fertigung. Zusätzlich oder alternativ können eine Radialbohrung und ein Radialstift vorteilhaft sein, wenn es besonders darauf ankommt, einen Rundlauf des Werkzeugkopfes sicherzustellen.

Ist am Werkzeugkopf eine Nut ausgebildet, gelten für dessen axiale Anteile die weiter oben bereits geschilderten Vorteile. Jedoch kann es vorteilhaft sein, die Nut mit einer flachen Steigung auszuführen, d.h. bspw. mit einem Winkel von 80° bezogen auf die Mittelachse, um etwa Rundlaufprobleme zu minimieren.

Weitere Aspekte und Vorteile der Erfindung werden nachfolgend anhand der beigefügten Figuren der Zeichnungen eingehender beispielhaft beschrieben. Hierbei zeigen:
- Fig. 1: in schematischer Form ein Ausführungsbeispiel eines Halters;
- Fig. 2: in schematischer Form ein Ausführungsbeispiel eines Wechselkopfes;
- Fig. 3: in Form einer teilweisen Schnittansicht ein erfindungsgemäßes Wechselkopfsystem mit dem Halter aus Fig. 1 und dem Kopf aus Fig. 2;
- Fig. 4: in schematischer Form den Halter aus Fig. 1 in einer um 90° gedrehten Ansicht mit Stift;
- Fig. 5: einen vergrößerten Ausschnitt aus Fig. 4 mit Bohrung und Stift;
- Fig. 6: eine Querschnittsansicht des Halters der Fig. 1 mit Bohrung;
- Fig. 7: in schematischer Form den Aufnahmeteil des Wechselkopfes aus Fig. 2 mit weiteren Details;
- Fig. 8: einen Längsschnitt durch ein weiteres Beispiel eines Halters;
- Fig. 9: eine schematische Draufsicht auf den Halter der Fig. 8;
- Fig. 10: eine perspektivische Ansicht auf einen Längsschnitt des Halters der Fig. 8 mit eingesetztem Werkzeugkopf in teilweiser Darstellung;
- Fig. 11: eine weitere perspektivische Ansicht auf das Wechselkopfsystem der Fig. 10; und
- Fig. 12: eine Seitenansicht auf das Wechselkopfsystem der Fig. 10 und 11.

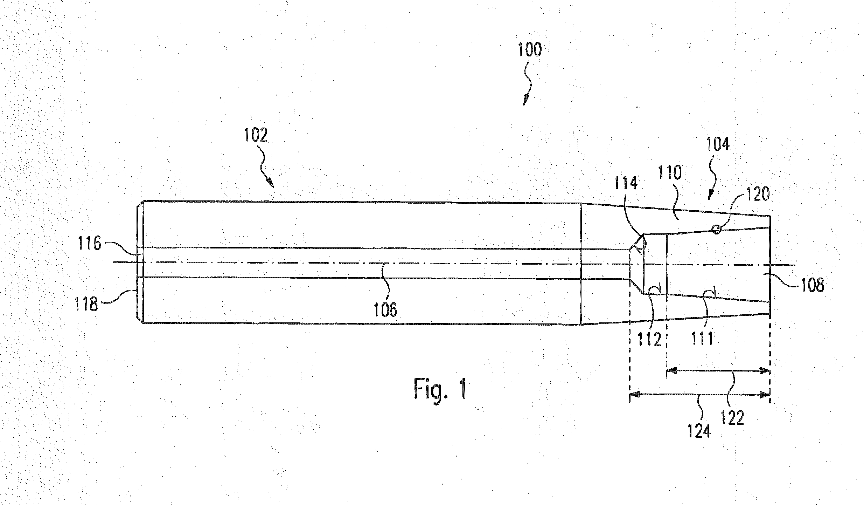

In Fig. 1 ist ein Ausführungsbeispiel eines Halters 100 für ein erfindungsgemäßes Wechselkopfsystem schematisch dargestellt. Der Halter 100 ist zumindest in einen Einspannbereich 102 und einen Aufnahmebereich 104 gegliedert. Der Einspannbereich 102 ist zum Einspannen des Halters 100 in ein Futter einer Metallbearbeitungsmaschine vorgesehen. Der Aufnahmebereich 104 ist zur Aufnahme eines Kopfes vorgesehen. Halter 100 und Wechselkopf werden entlang einer Verbindungsachse 106 zusammengefügt.

Der Einspannbereich 102 kann gemäß einer bekannten Normierungsvorschrift ausgebildet sein, bspw. als Hohlschaftkegel (HSK) gemäß einschlägiger, dem Fachmann vertrauter Norm-Verbindungen. Dieser Aspekt ist als solcher nicht Gegenstand der vorliegenden Erfindung und wird daher nachfolgend nicht weiter diskutiert.

Im Aufnahmebereich 104 ist eine Aufnahmeöffnung 108 zur Aufnahme einer Kegelform ausgebildet, d.h. eine Seitenwand 110 bildet mit einer inneren Oberfläche 111 die sich entlang der Achse 106 konusförmig verjüngende Aufnahmeöffnung 108, wobei die Verjüngung in einer Richtung weg vom Kopf bzw. einem zu bearbeitendem Werkstück erfolgt. In dieser Richtung schließen sich in der Aufnahmeöffnung 108 eine zylinderförmige innere Oberfläche 112 und eine weitere konusförmige innere Oberfläche 114 an. Letztere mündet in eine Bohrung 116, die zwischen Aufnahmeöffnung 108 und Einspannbereich 102 verläuft und sich zu einem hinteren Ende 118 des Halters 100 öffnet, bspw. um ein Kühlmedium an den Kopf heranzuführen oder den Zugriff eines Werkzeugs zum Einsetzen und/oder Entfernen eines Kopfes zu ermöglichen.

Die inneren Oberflächen 111, 112 und 114 sind gewindefrei ausgeführt. Im Gegensatz zu vielen herkömmlichen Wechselkopfsystemen ist bei dem hier beschriebenen System ein Gewinde nicht erforderlich, um einen Kopf in der Aufnahmeöffnung 108 sicher aufzunehmen und zu haltern. Das Zusammenwirken von Kopf und Halter wird weiter unten ausführlich beschrieben.

Im Aufnahmebereich 104 des Halters 100 befindet sich eine zylinderförmig ausgeführte Bohrung 120, welche die innere Oberfläche 111 der Seitenwand 110 tangential und streifend durchstößt, so dass sich die Bohrung 120 in das Innere der Aufnahmeöffnung 108 öffnet und an der inneren Oberfläche 111 der Seitenwand 110 einen Kanal bzw. eine Furche oder Kerbe bildet.

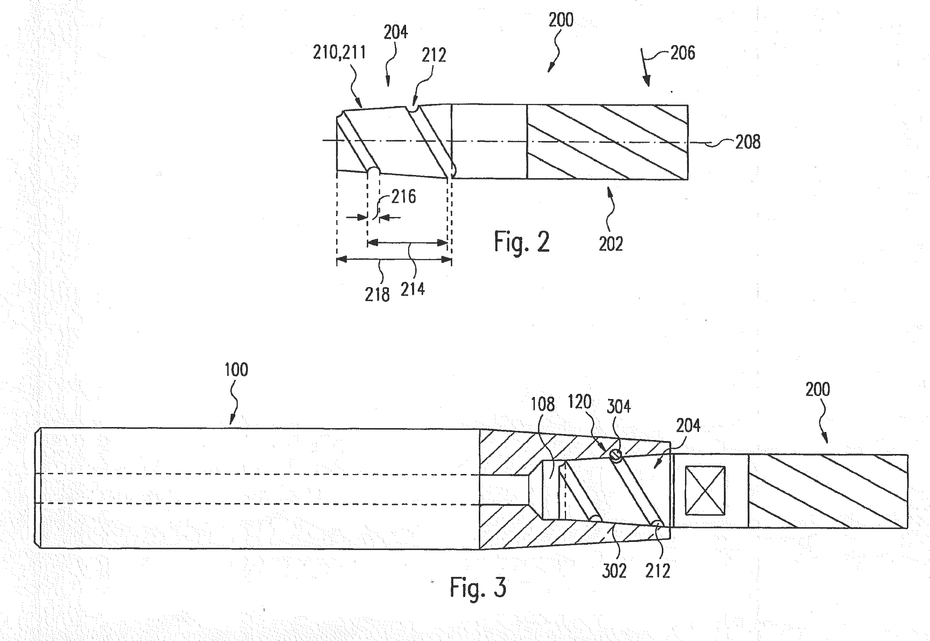

Fig. 2 zeigt ein Ausführungsbeispiel eines Kopfes 200 für ein erfindungsgemäßes Wechselkopfsystem. Der Kopf 200 hat einen Bearbeitungsbereich 202 und einen Verbindungsbereich 204. Der Bearbeitungsbereich 202 dient zur Bearbeitung eines Werksstücks und kann hierzu etwa über eine oder mehrere Schneidkanten verfügen, die bspw. spiralförmig mit einer durch den Pfeil 206 angedeuteten Richtung und Steigung um den Kopf 200 verlaufen.
Die Drehrichtung der Nut 212 kann vorteilhaft gleich zur Drehrichtung 206 von Schneidkanten des Bearbeitungsbereiches sein; es sind aber auch gegenläufige Drehrichtungen möglich. Der Bearbeitungsbereich eines Kopfes zur Metallbearbeitung ist jedoch als solches nicht Gegenstand der vorliegenden Erfindung und der Bearbeitungsbereich ist in Fig. 2 lediglich schematisch angedeutet.

Der Verbindungsbereich 204 dient zur Aufnahme des Kopfes 200 in einen Halter entlang der Achse 208, die dazu etwa mit der Achse 106 des Halters 100 in Fig. 1 in Übereinstimmung zu bringen ist. Der Verbindungsbereich 204 ist kegelförmig ausgebildet, d.h. mit einer Seitenwand 210, deren äußere Oberfläche 211 sich entlang der Achse 208 konusförmig verjüngt, und zwar in einer Richtung zum Halter bzw. von einem zu bearbeitendem Werkstück weg.

In die Seitenwand 210 ist eine Nut 212 eingeschnitten, die sich in diesem Beispiel über den gesamten Verbindungsbereich 204 erstreckt und dazu spiralförmig 1,5 mal um den Kopf 200 verläuft. Die Nut 212 stellt kein Gewinde dar, wie sich schon aus dem Abstand 214 zwischen zwei Drehungen der Nut 212 ergibt. Der Abstand 214 beträgt anders als bei Gewinden üblich ein Mehrfaches der Nutbreite 216.

Fig. 3 zeigt ein Wechselkopfsystem 300 mit dem Halter 100 aus Fig. 1, in den der Kopf 200 aus Fig. 2 aufgenommen ist. Konkret ist der Verbindungsbereich 204 des Kopfes 200 in die Aufnahmeöffnung 108 des Halters 100 aufgenommen. Hierbei sind die Oberfläche 211 des Verbindungsbereiches 204 sowie die innere Oberfläche 111 der Aufnahmeöffnung 108 als Passflächen 302 ausgebildet, die sich unmittelbar aneinander anlagern, um einerseits eine selbstzentrierende Aufnahme des Kopfes 200 im Halter 100 zu gewährleisten, und andererseits im Betrieb eine reibschlüssige Verbindung zu gewährleisten, die den Kopf 200 im Halter 100 verdrehfrei hält.

Für einen optimierten Halt ist die Aufnahmeöffnung 108 im Halter 100 in axialer 106 Richtung tiefer als der Verbindungsbereich 204 des Kopfes 200, d.h. die Aufnahmeöffnung 108 im Bereich der Passfläche 302 bzw. inneren Oberfläche 111 hat eine axiale Tiefe 122 (vgl. Fig. 1), die in etwa der axialen Tiefe 218 des Verbindungsbereiches 204 entspricht; jedoch hat die Aufnahmeöffnung 108 insgesamt eine größere axiale Tiefe 124. Eine Plananlage des Kopfes 200 am Halter 100 ist in dem hier gezeigten Beispiel nicht vorgesehen.

Die Passfläche 302 entspricht der Anlagerung der äußeren Oberfläche 210 des Kopfes 200 an die innere Oberfläche 111 des Halters 100 in der Aufnahmeöffnung 108. Die Oberflächen 210 und 111 müssen keine exakt gleiche axiale Erstreckung haben. In Fig. 3 ist gezeigt, dass der kegelförmige Verbindungsbereich 210 sich in den Bereich der zylindrischen Seitenfläche 112 in der Aufnahmeöffnung 108 hinein erstreckt. Der mit der kegelförmigen Passung erzielte Reibschluss wird durch die Nut 212 im Kopf 200 nicht beeinträchtigt, nachdem die Nut 212 nur einen geringen Teil der Oberfläche der Oberfläche 210 des Verbindungsbereiches 204 einnimmt.

In die Bohrung 120 ist ein Stift 304 aufgenommen, der in die Nut 212 am Kopf 200 eingreift. Der Stift 304 kann vor der Aufnahme des Kopfes 200 in die Bohrung eingefügt werden, so dass der Kopf 200 mit einer drehenden Bewegung in die Aufnahmeöffnung 108 am Halter einzubringen ist. Der Stift 304 kann auch nachträglich eingefügt werden.

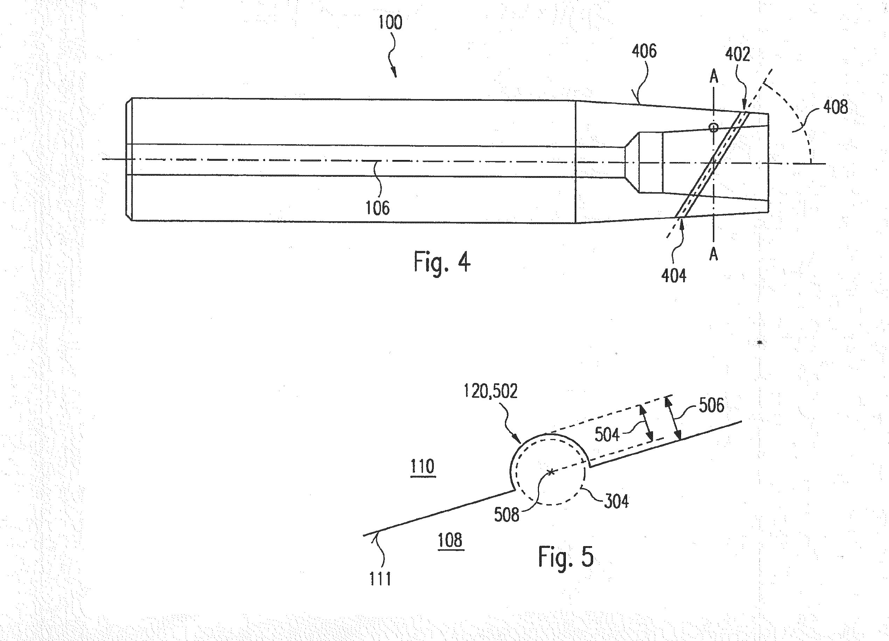

Fig. 4 zeigt den Halter 100 aus Fig. 1 in einer um 90° gedrehten, schematischen Ansicht, aus der die Erstreckung der Bohrung 120 durch die Seitenwand 110 erkennbar ist. Die Bohrung 120 verläuft geradlinig zwischen zwei Öffnungen 402, 404 an der äußeren Oberfläche 406 des Aufnahmebereichs 104. Wie aus den Fig. 1 und 3 ersichtlich, sind die Punkte 402, 404 so gewählt, dass die innere Oberfläche 111 bzw. Passfläche 302 gerade tangential streifend durchstoßen wird. Weiterhin hat der Verlauf der Bohrung 120 einen axialen Anteil, d.h. die Bohrung 120 verläuft nicht senkrecht zur Achse 106, sondern ist gegenüber der Achse 106 in einem Winkel 408 geneigt, der kleiner als 90° ist. Der Winkel 408 kann bspw. 60° oder weniger betragen, und kann z.B. 45° betragen.

Fig. 5 zeigt einen vergrößerten Ausschnitt aus Fig. 1 mit der Bohrung 120, die am Punkt des Durchstoßens der inneren Oberfläche 111 der Seitenwand 110 eine Kerbe 502 ausbildet. Die Bohrung 120 beschreibt in diesem Beispiel einen Zylinder, somit hat die Kerbe 502 die Kontur eines Teilkreises. Ein Radius der zylinderförmigen Bohrung 120 ist mit 504 bezeichnet. Die mlnimale Tiefe 506 der Kerbe 502 beim Durchstoßen der Fläche 111 bleibt größer als der Radius 504, d.h. die Bohrachse 508 bleibt innerhalb der Seitenwand 110. Somit ist auch der Anteil des Durchmessers des Stiftes 304, der in die Aufnahmeöffnung 108 einkragt, kleiner als der Radius des Stiftes, solange der Stift 304 die Bohrung 120 im wesentlich ausfüllt. Dies trägt zur Stabilisierung des Stiftes bei bzw. ermöglicht das Vorsehen dünnerer Stifte.

In anderen Ausführungsbeispielen kann die Nut 120 und/oder der Stift 304 statt einer zylinderförmigen Kontur zusätzlich abschnittsweise oder alternativ andere Querschnittsformen haben und kann etwa einen polygonalen, z.B. hexagonalen Querschnitt haben. Diese oder andere Querschnitte können bspw. einen Halt des Stiftes in der Bohrung und/oder eine mechanische Stabilität des Stiftes verbessern.

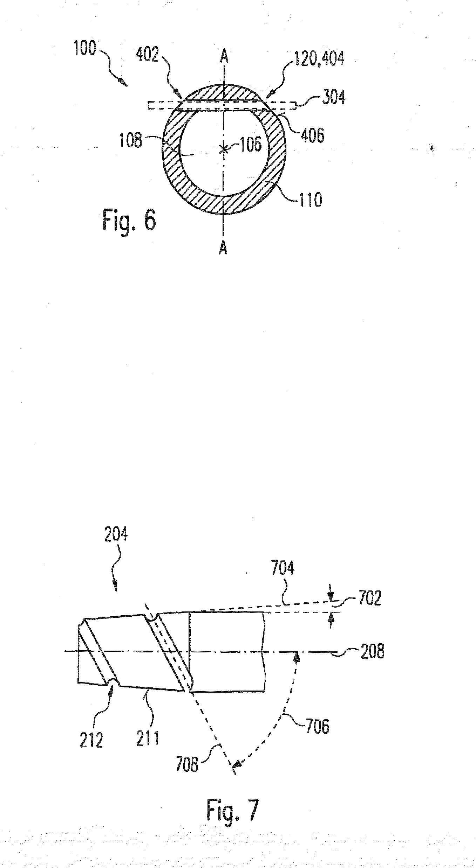

Fig. 6 ist eine schematische Draufsicht auf den Halter 100 in axialer Richtung, d.h. in Richtung der Achse 106 aus Fig. 1. Hier ist wieder der tangentiale Verlauf der Bohrung 120 erkennbar, welche die Aufnahmeöffnung 108 gerade streift. Die Bohrung 120 verläuft geradlinig zwischen den Öffnungen 402 und 404 in der äußeren Oberfläche 406 der Seitenwand 110. Der Stift 304 kann länger sein als die Bohrung 120. Nach Einführung in die Bohrung 120 kann der Stift gekürzt werden, so dass er bündig mit der äußeren Oberfläche 406 abschließt.

Fig. 7 zeigt Details des Verbindungsbereichs 204 des Kopfes 200 aus Fig. 2. Der Winkel 702 zwischen einer Parallelen 704 zur Oberfläche 211 und der Achse 208 beschreibt die Kegelform des Bereiches 204. Die Abweichung von der Zylinderform kann gering sein, d.h. der Winkel 702 kann im Bereich zwischen 1° und 10°, bevorzugt bspw. bei 4° liegen.

Eine Steigung der spiralförmig verlaufenden Nut 212 kann durch einen Winkel 706 zwischen einerseits der Verbindungsachse 208 bzw. 106 von Halter 100 und Kopf 200 und andererseits einer Verlaufsrichtung 708 der Nut 212 beschrieben werden. Der Winkel 706 wird im allgemeinen kleiner gewählt werden als für ein Gewinde typisch, d.h. die Nut 212 verläuft steiler als ein Gewinde. Bspw. kann der Winkel 706 einen Wert von 70° oder weniger haben. Der Winkel 706 kann etwa einen Wert von 60° haben, wie in Fig. 7 dargestellt, oder kann einen noch kleineren Wert haben, wie etwa 45°.

Die axiale Steigung der Bohrung 120, in Fig. 4 anhand des Winkels 408 gezeigt, kann mit der Steigung der Nut 212, in Fig. 7 anhand des Winkels 706 gezeigt, zusammenfallen. Ein Eingreifen des Stiftes 304 in die Nut 212 erfolgt allerdings nur an einem Punkt, d.h. dort wo die Bohrung 120 die innere Seitenwand 110 durchstößt. Abmessungen von Bohrung und Stift einerseits und Nut andererseits müssen daher nicht sehr genau übereinstimmen; insbesondere bestehen geringere Anforderungen als bei einem über seine gesamte Länge ineinandergreifenden Gewinde. Abweichungen können etwa bei den Steigungen 408 und 706 toleriert werden, die um 15° oder mehr voneinander abweichen können, oder auch bei den Durchmessern von Bohrung bzw. Stift und Nut: Der Stift kann z.B. einen kleineren Radius als die Nut haben, so dass der Stift mit etwas Spiel in die Nut eingreift.

Bei dem hier gezeigten Ausführungsbeispiel ist eine Nut 212 vorgesehen, die spiralförmig um den gesamten Verbindungsbereich 204 herum verläuft. Nachdem der Stift nur an einer Stelle in die Nut eingreift, kann bei anderen Ausführungsbeispielen nur eine kürzere Nut vorgesehen sein, die sich bspw. nur über ein kleines, axiales und/oder radiales Segment des Verbindungsbereiches erstreckt. Bei diesen oder anderen Ausführungsbeispielen können auch mehrere Nute vorgesehen sein, um ein schnelles Einsetzen bzw. Wechseln des Kopfes zu erleichtern.

Auch ist es prinzipiell denkbar, mehrere Bohrungen am Halter und dementsprechend mehrere Stifte vorzusehen. Beispielsweise können zwei einander in einer Aufnahmeöffnung gegenüberliegende Stifte vorgesehen sein, die in zwei entsprechende Nute am Kopf eingreifen.

Der Durchmesser von Bohrung, Stift und Nut kann generell klein im Vergleich zu anderen Abmessungen von Halter und Kopf gewählt werden, bspw. axialer Erstreckung oder Durchmesser von Aufnahme- oder Verbindungsbereich. Beispielsweise kann ein Durchmesser von Bohrung, Stift, und Nut im Bereich von wenigen Millimetern liegen, etwa im Bereich von 1 bis 2 Millimetern, während der Durchmesser der Aufnahmeöffnung zwischen 10 und 20 Millimetern liegen kann und die Seitenwände, die die Aufnahmeöffnung ausbilden, eine Dicke von mehreren Millimetern, bspw. 5 Millimetern haben können. Bohrung, Stift und Nut haben somit keine Auswirkungen auf die mechanische Stabilität von Halter und Kopf bzw. Einsatzwerkzeug.

Ein Verfahren zur Herstellung des Stiftes 304 der vorhergehenden Figuren kann einen Schritt umfassen, bei dem der Stift 304 in der gewünschten Länge zugeschnitten wird.

Ein Verfahren zur Herstellung des Halters 100 der vorhergehenden Figuren kann einen Schritt umfassen, mit dem eine Stange aus Vollhartmetall auf die erforderliche Länge gekürzt wird. In einem weiteren Schritt werden bspw. die Bohrung 116 und die Aufnahmeöffnung 108 eingebracht. Dieser Schritt wird dadurch vereinfacht, dass ein Innengewinde in der Aufnahmeöffnung 108 entfallen kann. In einem weiteren Schritt wird die Bohrung 120 eingebracht.

In einem Schritt, der ab Werk bei der Herstellung des Halters 100 oder vor Ort beim (z.B. erstmaligen) Einsatz des Halters 100 in einer Metallbearbeitungsmaschine durchgeführt werden kann, wird der Stift 304 in die Bohrung 120 eingefügt. In einem weiteren Schritt wird der Stift 304 in der Bohrung 120 arretiert, bspw. durch Verkleben. In einem weiteren Schritt werden überstehende Enden des Stiftes 304 abgeschnitten. Die vorstehenden Schritte können je nach den Anforderungen des Einzelfalls auch weggelassen werden.

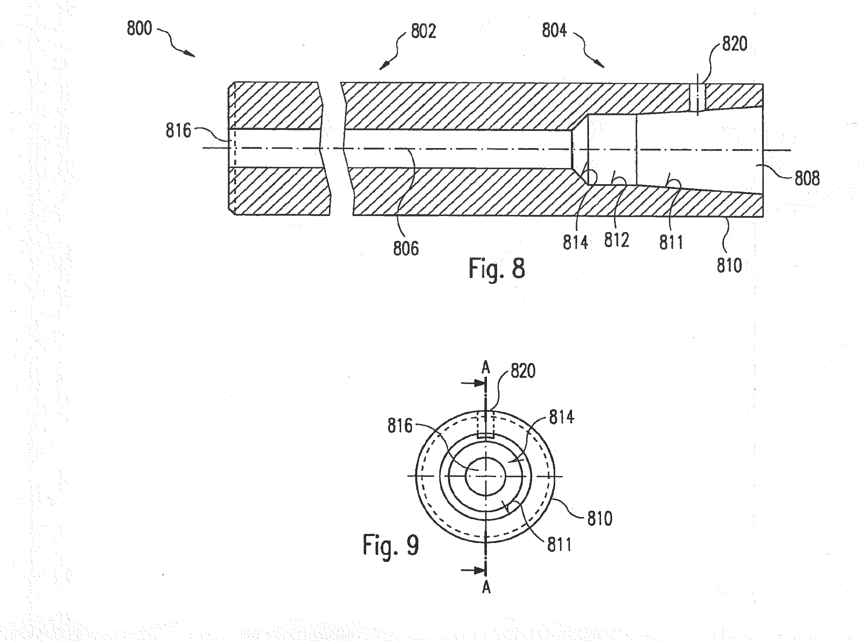

Ein Verfahren zur Bereitstellung des einsatzbereiten Wechselkopfsystems der Fig. 1 - 7 kann einen Schritt umfassen, bei dem der Wechselkopf 200 in die Aufnahmeöffnung 108 des Halters 100 eingebracht wird. Ist der Stift 304 bereits eingebracht, ist lediglich der Kopf 200 in die Halterung 100 einzudrehen, bis ein sicherer Passsitz erreicht ist. Mit Bezug auf Fig. 8 - 12 ist weiter unten ein alternatives Bereitstellungsverfahren beschrieben, bei dem zunächst ein (erster) Kopf eingesetzt und dann der Stift durch die Bohrung hindurch in Eingriff mit dem Kopf gebracht wird. Beide Verfahren sind für alle hier geschilderten Ausführungsbeispiele anwendbar.

Soll der Werkzeugkopf 200 gewechselt werden, wird dieser aus der Halterung 100 mittels einer drehenden Bewegung entfernt, wie sie durch den Verlauf der im Eingriff mit dem Stift 304 stehenden Nut 212 vorgegeben ist. Ein neuer Wechselkopf kann dann in entsprechender Weise in die Halterung 100 eingepasst werden, bis ein derartiger Passsitz erreicht ist, bei dem der Stift 304 in die Nut 212 des neuen Kopfes eingreift.

Das Bereitstellen eines einsatzbereiten Wechselkopfsystems kann automatisiert erfolgen. Insbesondere kann ein Wechsel des Werkzeugkopfes 200 automatisiert erfolgen. Hierzu kann ein Abschnitt 220 des Werkzeugwechselkopfes 200 zum Angriff eines geeigneten externen Werkzeugs ausgebildet sein. Im Beispiel der Fig. 3 sind im Abschnitt 220 Schlüsselflächen 222 ausgebildet, die für den Angriff eines Maulschlüssels ausgebildet sind. Dieser kann manuell oder automatisiert angreifen, um den Kopf 200 im Halter 100 zu lösen, herauszudrehen, etc.

Ein Verfahren zur Herstellung des Kopfes 200 der vorhergehenden Figuren kann einen Schritt umfassen, mit dem eine Stange aus Vollhartmetall auf die erforderliche Länge gekürzt wird. In einem weiteren Schritt wird der Bearbeitungsbereich 202 hergestellt, bspw. indem Schneidkanten herausgearbeitet werden. Vor oder in diesem Schritt können ggf. Kühlkanäle eingebracht werden. In einem weiteren Schritt wird die Nut 212 in den Verbindungsbereich 204 eingebracht. Die vorstehenden Schritte können parallel oder in beliebiger Reihenfolge sequentiell vorgesehen werden.

Zur Herstellung von Stift, Halter und Kopf können etwa Diamantwerkzeuge zum Einsatz kommen.

Fig. 8 zeigt schematisch einen Halter 800 eines weiteren Beispiels für ein Wechselkopfsystem.

Viele Aspekte der weiter oben beschriebenen Ausführungsbeispiele betreffen in gleicher Weise oder sinngemäß auch die nachfolgend beschriebenen Beispiele. Auf viele dieser Aspekte wird nachfolgend nicht erneut eingegangen, vielmehr werden vorwiegend Alternativen und/oder Modifikationen dargestellt.

Der Halter 800 umfasst einen verkürzt dargestellten Einspannbereich 802 und einen Aufnahmebereich 804. Der Einspannbereich 802 ist zum Einspannen des Halters 800 in ein Futter einer Metallbearbeitungsmaschine vorgesehen. Der Aufnahmebereich 804 ist zur Aufnahme und Halterung eines Werkzeugkopfes vorgesehen wie nachfolgend genauer beschrieben. Halter 800 und Wechselkopf werden entlang einer Verbindungsachse 806 zusammengefügt. Diese fällt mit den jeweiligen Mittelachsen von Halter 800 bzw. Werkzeugkopf zusammen.

Im Aufnshmebereich 804 ist eine Aufnahmeöffnung 808 zur Aufnahme einer Kegelform ausgebildet, d.h. eine Seitenwand 810 bildet mit einer inneren Oberfläche 811 die sich entlang der Achse 806 konusförmig verjüngende Aufnahmeöffnung 808. An die Aufnahmeöffnung 808 schließt sich eine zylinderförmige innere Oberfläche 812 und eine weitere konusförmige innere Oberfläche 814 an. Letztere mündet in eine Bohrung 816 zwischen Aufnahmeöffnung 808 und Einspannbereich 802. Ein Plananschlag, bspw. vermittelt durch eine Anschlagschraube, auf den der Werkzeugkopf aufsetzt, ist bei einer Kegelpassung entbehrlich. Die inneren Oberflächen 811, 812 und 814 sind gewindefrei ausgeführt.

Eine zylinderförmig ausgeführte Bohrung 820 durchstößt die Seitenwand 810 des Aufnahmebereiches 804, d.h. die Bohrung 820 verläuft von der Außenseite der Seitenwand 810 und öffnet sich in das Innere der Aufnahmeöffnung 808. Die Bohrung 820 verläuft senkrecht zur Mittelachse 806.

Fig. 9 ist eine schematische Draufsicht auf den Halter 800 in axialer Richtung, d.h. in die Aufnahmeöffnung 808 und die Bohrung 816 hinein, so dass die inneren Wandungen 811 und 814 sichtbar sind. Die Linie A-A bezeichnet den Schnitt durch den Halter 800 wie in Fig. 8 gezeigt. Die Bohrung 820 ist mit gestrichelten Linien angedeutet, so dass der geradlinige, radiale Verlauf der Bohrung 820 erkennbar ist, d.h. die Bohrung 820 verläuft in radialer Richtung bezogen auf die Mittelachse 806 des Halters 800.

Die Bohrung 820 kann bspw. für einen Stift mit einem Durchmesser von etwa 2,0 mm ausgelegt sein bei einem Außendurchmesser des Aufnahmebereiches 804 von etwa 18 mm.

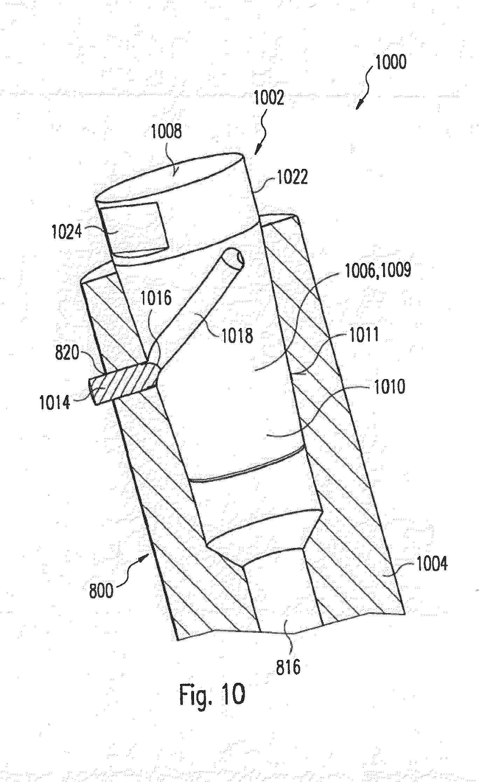

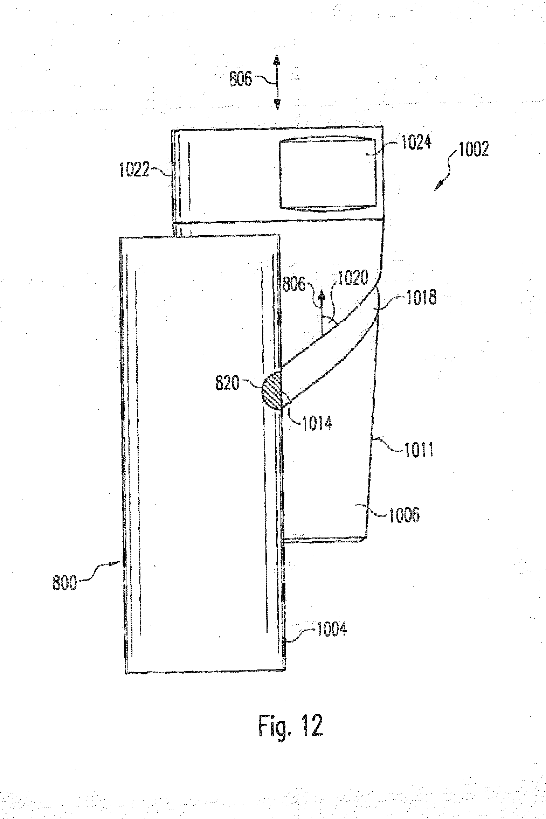

Die Fig. 10, 11 und 12 zeigen ausschnittsweise ein Beispiel 1000 eines Wechselkopfsystems umfassend den Halter 800 aus den Fig. 8 und 9 sowie einen Werkzeugkopf 1002, der in den Zeichnungen in den Aufnahmebereich 808 des Halters 800 aufgenommen ist. Zur Verdeutlichung ist der Halter 800 entlang einer Schnittebene 1004 aufgeschnitten gezeigt. Der Kopf 1002 ist nur teilweise dargestellt, d.h. nur mit einem Verbindungsbereich 1006, wobei ein sich an eine Grenzfläche 1008 anschließender Bearbeitungsbereich weggelassen ist. Die Figuren 10, 11 und 12 zeigen diese Anordnung aus verschiedenen Blickwinkeln, wobei die Blickrichtung in der Fig. 12 genau in die Schnittebene 1004 fällt.

Der Verbindungsbereich 1006 dient zur Aufnahme des Kopfes 1002 in den Halter 800 entlang der Achse 806, so dass die Achse 806 gleichzeitig die Mittelachsen von Kopf 1002 und Halter 800 bezeichnet. Der Verbindungsbereich 1006 ist zumindest teilweise kegelförmig ausgebildet, d.h. der Verbindungsbereich 1006 verfügt über einen Kegelabschnitt 1009 mit einer sich konisch verjüngenden Seitenwand 1010. Der Kegelabschnitt 1009 kann mit der Mittelachse des Kopfes 1002 einen Winkel bilden, der bspw. etwa 5° beträgt.

Eine Oberfläche 1011 des Kegelabschnitts 1009 von Kopf 1002 einerseits, und die innere Oberfläche 811 der Aufnahmeöffnung 808 des Halters andererseits bilden Passflächen 1012 aus, die sich bei Aufnahme des Kopfes 1002 in die Halterung 800 unmittelbar aneinander anlagern. Auf diese Weise kann eine selbstzentrierende Aufnahme des Kopfes 1002 im Halter 800 gewährleistet werden. Zusätzlich oder alternativ kann im Betrieb der Kopf 1002 im Halter 800 verdrehfrei gehalten werden, so dass weitere Elemente für eine zusätzliche Torsionsaufnahme entfallen können.

Die Bohrung 820 im Halter 800 durchstößt die innere Oberfläche 811 bzw. Passfläche 1012 zur Anlagerung des Kegelabschnitts 1006. In die Bohrung 820 ist ein Stift 1014 aufgenommen, der in den Figuren 10, 11 und 12 im Längsschnitt dargestellt ist. Der Stift 1014 kann aus demselben Material bestehen wie Halter 800 und/oder Werkzeug 1002, bspw. aus einem Hartmetall. Nachdem der Stift 1014 kein Torsionsmoment aufnehmen muss, kann dieser vergleichsweise dünn ausgeführt sein und kann bspw. einen Durchmesser von etwa 2,0 mm haben.

Der Stift 1014 verfügt über einen Kopf-Eingriffsbereich 1016 zum Eingriff in den Werkzeugkopf 1002. Der Stift 1014 hat am Eingriffsbereich 1016 einen Vollradius, d.h. ist kugelförmig, im vorliegenden Beispiel halbkugelförmig ausgebildet.

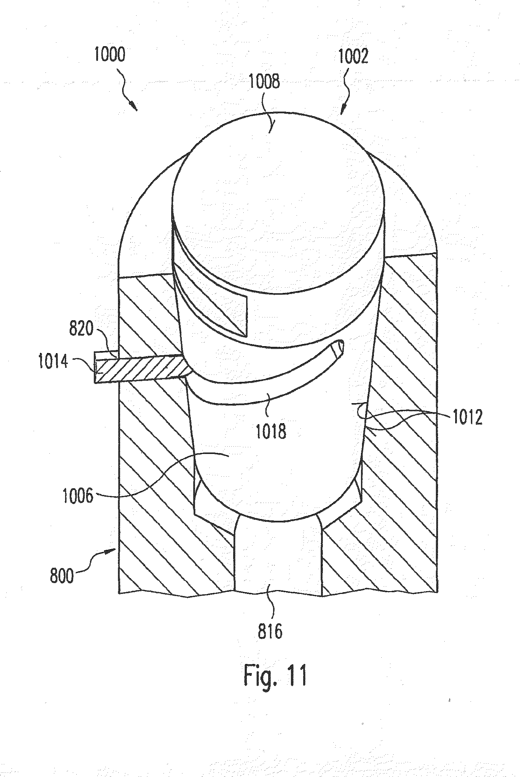

Im einsatzbereiten Zustand des Wechselkopfsystems 1000 greift der Stift 1014 in eine Nut 1018 ein, die am Kopf 1002 vorliegt. Die Nut 1018 ist zur Aufnahme von Kugelkopf 1016 des Stiftes 1014 ausgebildet, wie am besten aus den Fig. 10 und 11 ersichtlich.

Im vorliegenden Beispiel ist die Nut 1018 im Kegelabschnitt 1009 des Verbindungsbereiches 1006 eingebracht. Es ist auch denkbar, eine Nut in einem anderen als einem Kegelabschnitt vorzusehen, bspw. In einem zylindrischen Bereich eines Werkzeugkopfes, sofern ein derartiger Abschnitt oder Bereich für die Nut genügend Längserstreckung (entlang einer Längsachse bzw. Mittelachse) bietet. Bei einem Ausführungsbeispiel könnte eine radiale Bohrung in einer zylindrischen Innenwandung eines Aufnahmebereichs münden, die etwa vergleichbar der inneren Oberfläche 812 in Fig. 8 sein kann. Zusätzlich oder alternativ ist es denkbar, dass die Bohrung für den Stift nicht in einer Passfläche mündet, sondern dass der Stift bei eingesetztem Kopf einen Abstand zwischen Halter und Kopf überwindet.

Die Nut 1018 kann sich teilweise, ganz, oder mehrfach um den Kopf 1002 herum erstrecken. Gegenwärtig ist es bevorzugt, dass die Nut 1018 mit einer konstanten Steigung bezogen auf die Mittelachse 806 des Werkzeugs 1002 verläuft. Die Steigung kann mit der Mittelachse 806 einen Winkel 1020 bilden, der bspw. etwa 80° beträgt, vgl. Fig. 12. Eine flache Steigung in dieser Art kann vorteilhaft sein um einen einwandfrei zentrierten Sitz des Werkzeugs 1002 im Halter 800 zu erreichen, Rundlauffehler zu minimieren, etc.

Der Stift 1014 kann vor der Aufnahme des Kopfes 1002 in die Bohrung 820 eingefügt werden, so dass der Kopf 1002 mit einer drehenden Bewegung in die Aufnahmeöffnung 808 am Halter 800 einzubringen ist. Der Stift 1014 kann auch nachträglich eingefügt werden. Der Stift 1014 kann dazu vorgesehen sein, im Halter verlötet zu werden. Der Stift 1014 kann beim Einsetzen länger sein als die Bohrung 820. Nach Einführung in die Bohrung 820 kann der Stift 1014 gekürzt werden, so dass er bündig mit der äußeren Oberfläche des Halters 800 abschließt.

Ein Verfahren zur Bereitstellung des einsatzbereiten Wechselkopfsystems 1000 der Fig. 8 - 12 kann einen Schritt umfassen, bei dem der Wechselkopf 1002 in die Aufnahmeöffnung 808 des Halters 800 eingebracht wird. In einem weiteren Schritt wird der Stift 1014 in die Bohrung 820 am Halter eingebracht, und zwar so weit, bis der Eingriffsteil 1016 des Stiftes 1014 in Eingriff mit dem Verbindungsteil 1006 von Kopf 1002 steht. Konkret sollte der Stift 1014 in die Nut 1018 am Verbindungsbereich 1006 eingreifen. Um dies zu erreichen, ist ggf. der Werkzeugkopf 1002 versuchsweise zu rotieren, ggf. mit unterschiedlichen Drehrichtungen. In einem weiteren Schritt kann dann der Stift 1014 in der Bohrung 820 verlötet werden. Optional kann ein nach außen überstehender Teil des Stiftes 1014 abgeschnitten werden.

Soll der Werkzeugkopf 1002 gewechselt werden, wird dieser aus der Halterung 800 herausgedreht, wie dies durch den Verlauf der im Eingriff mit dem Stift 1014 stehenden Nut 1018 vorgegeben ist. Ein neuer Wechselkopf kann dann in entsprechender Weise in die Halterung 800 eingepasst werden, bis ein Passsitz erreicht ist, bei dem der Stift 1014 in die Nut des neuen Kopfes eingreift.

Das Bereitstellen eines einsatzbereiten Wechselkopfsystems 1000 kann automatisiert erfolgen, d.h. einige oder alle der hier diskutierten Schritte und sonstigen Verfahrensaspekte können maschinell durchgeführt werden. Insbesondere kann ein Wechsel des Werkzeugkopfes 1002 automatisiert erfolgen. Ein Abschnitt 1022 des Werkzeugwechselkopfes 1002 kann für den Angriff eines geeigneten automatischen Werkzeugs ausgebildet sein, bspw. eines Roboterarms, etc. Im Beispiel der Fig. 10-12 sind im Abschnitt 1022 Schlüsselflächen 1024 ausgebildet, die für den Angriff eines Maulschlüssels ausgebildet sind. Dieser kann bspw. den Kopf 1002 aus dem Halter 800 lösen.

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen. Insbesondere sind dem Fachmann bestimmte Kombinationen von vorstehend separat beschriebenen Merkmalen als zweckmäßig oder vorteilhaft ersichtlich. Beispielsweise ist es sinnvoll, den Halter statt aus Hartmetall aus Stahl zu fertigen. Dadurch wird eine höhere Dämpfung erzielt.

Auch die anderen Komponenten können statt aus Hartmetall auch aus Stahl gefertigt werden.

## Patentansprüche

1. Wechselkopfsystem, insbesondere aus Hartmetall oder Stahl, als Einsatzwerkzeug für Maschinen zur Metallbearbeitung,
mit einem Halter (100), einem Kopf (200), sowie einem Stift (304) zur Befestigung des Kopfes (200) am Halter (100) über genau eine Bohrung (120) am Halter (100),
wobei der Kopf (200) einen sich konisch verjüngenden Kegelabschnitt (210) und der Halter (100) eine gewindefreie Ausnehmung (108) zur Aufnahme und Anlagerung des Kegelabschnitts (210) über eine gemeinsame Passfläche (302) aufweist,
wobei die Bohrung (120) die Passfläche (302) zwischen Halter (100) und Kopf (200) tangential durchstößt,
wobei die Bohrung (120) schräg zu einer Normalen zur Verbindungsachse (106, 208) von Halter (100) und Kopf (200) verläuft,
wobei bei Aufnahme des Kopfes (200) am Halter (100) der Stift (304) in eine Nut (212) am Kegelabschnitt (210) des Kopfes (200) eingreift,
wobei die Nut (212) derart spiralförmig um den Kopf verläuft, dass der axiale Abstand (214) der Nut (212) von sich selbst nach einer Umdrehung ein Mehrfaches der Nutbreite (216) beträgt, und
wobei die Bohrung (120) eine äußere Oberfläche des Halters mindestens einmal durchstößt.

2. Wechselkopfsystem nach Anspruch 1,
**dadurch gekennzeichnet, dass**
der Stift (304) zur Aufnahme in die Bohrung (120) derart vorgesehen ist, dass bei Aufnahme des Kopfes (200) am Halter (100) der Stift (304) in die Nut (212) eingreift, und zwar um weniger als die Hälfte eines Stiftdurchmessers.

3. Wechselkopfsystem nach Anspruch 1 oder 2,
**dadurch gekennzeichnet, dass**
die Bohrung (120) und/oder die Nut (212) bezogen auf die Normale zur Verbindungsachse (106, 208) von Halter (100) und Kopf (200) einen Winkel bildet, der zwischen 20° und 60°, bevorzugt zwischen 30° und 45° liegt.

4. Wechselkopfsystem nach einem der Ansprüche 1 bis 3,
**dadurch gekennzeichnet, dass**
die Nut (212) 3 mal oder weniger, bevorzugt 1,5 mal oder weniger, spiralförmig um den Kopf (200) verläuft.

## Claims

1. Exchangeable-head system, especially made of hard metal or steel, as an insertable tool for machines for metalworking,
with a holder (100), a head (200), and a pin (304) for attachment of the head (200) to the holder (100) via precisely one borehole (120) in the holder (100),
wherein the head (200) comprises a conically tapering conical portion (210), and the holder (100) comprises a threadless recess (108) for mounting and retaining the conical portion (210) via a common seating surface (302),
wherein the borehole (120) penetrates the seating surface (302) between holder (100) and head (200) in a tangential manner,
wherein the borehole (120) extends diagonally to a perpendicular to the connecting axis (106, 208) of holder (100) and head (200),
wherein, upon mounting the head (200) on the holder (100), the pin (304) engages in a groove (212) in the conical portion (210) of the head (200),
wherein the groove (212) extends spirally around the head in such a manner that the axial distance (214) of the groove (212) from itself after one rotation is a multiple of the groove width (216), and
wherein the borehole (120) penetrates an outer surface of the holder at least once.

2. Exchangeable-head system according to Claim 1,
**characterized in that,**
for mounting in the borehole (120), the pin (304) is provided in such a manner that, upon mounting of the head (200) on the holder (100), the pin (304) engages in the groove (212), and in fact by less than half of one pin diameter.

3. Exchangeable-head system according to Claim 1 or 2,
**characterized in that,**
with reference to the perpendicular to the connecting axis (106, 208) of holder (100) and head (200), the borehole (120) and/or the groove (212) forms an angle disposed between 20° and 60°, preferably between 30° and 45°.

4. Exchangeable-head system according to any one of Claims 1 to 3,
**characterized in that**
the groove (212) extends spirally around the head (200) 3 times or less, preferably 1.5 times or less.

## Revendications

1. Système à tête interchangeable, en particulier en métal dur ou en acier, utilisé en tant qu'outil à insérer pour des machines d'usinage de métaux,
comportant un support (100), une tête (200) ainsi qu'une goupille (304) pour fixer la tête (200) sur le support (100) par l'intermédiaire d'exactement un alésage (120) sur le support (100),
dans lequel la tête (200) comporte une partie conique (210) qui se rétrécit de manière conique et le support (100) comporte un évidement non fileté (108) pour recevoir et monter la partie conique (210) par l'intermédiaire d'une surface de contact commune (302),
dans lequel l'alésage (120) traverse la surface de contact (302) de manière tangentielle entre le support (100) et la tête (200),
dans lequel l'alésage (120) s'étend de manière inclinée par rapport à une normale à l'axe d'assemblage (106, 208) du support (100) et de la tête (200),
dans lequel lors de la réception de la tête (200) sur le support (100), la goupille (304) s'engage dans une rainure (212) sur la partie conique (210) de la tête (200),
dans lequel la rainure (212) s'étend en spirale autour de la tête de sorte que la distance axiale (214) de la rainure (212) elle-même, après une rotation, est égale à un multiple de la largeur de rainure (216), et
dans lequel l'alésage (120) traverse au moins une fois une surface extérieure du support.

2. Système à tête interchangeable selon la revendication 1,
**caractérisé en ce que**
la goupille (304) est destinée à être reçue dans l'alésage (120), de sorte que lors de la réception de la tête (200) sur le support (100), la goupille (304) s'engage dans la rainure (212), à savoir sur une distance inférieure à la moitié d'un diamètre de goupille.

3. Système à tête interchangeable selon la revendication 1 ou 2,
**caractérisé en ce que**
l'alésage (120) et/ou la rainure (212) forme un angle par rapport à la normale à l'axe d'assemblage (106, 208) du support (100) et de la tête (200) compris entre 20° et 60°, de préférence entre 30° et 45°.

4. Système à tête interchangeable selon l'une des revendications 1 à 3,
**caractérisé en ce que**
la rainure (212) s'étend 3 fois ou moins, de préférence 1,5 fois ou moins, en spirale autour de la tête (200).
